# EUROPEAN PATENT SPECIFICATION

(11) **EP 1 929 067 B1**
(45) Date of publication and mention of the grant of the patent: **23.01.2019**
(21) Application number: 05770219.3
(22) Date of filing: 12.08.2005
(51) Int. Cl.: C23C 18/12, H01G 9/20

(54) **A METHOD OF PRODUCING TITANIUM OXIDE FILMS AT LOW TEMPERATURES FOR PHOTOCATALYTIC AND PHOTOVOLTAIC APPLICATIONS**
VERFAHREN ZUR HERSTELLUNG VON TITANDIOXIDFILMEN BEI NIEDRIGEN TEMPERATUREN FÜR PHOTOKATALYTISCHE UND PHOTOVOLTAISCHE ANWENDUNGEN
PROCEDE DE FABRICATION DE FILMS D'OXYDE DE TITANE A BASSES TEMPERATURES POUR DES APPLICATIONS PHOTOCATALYTIQUES ET PHOTOVOLTAIQUES

(43) Date of publication of application: 11.06.2008
(73) Proprietor: Türkiye Sise Ve Cam Fabrikalari A.S., 34130 Istanbul (TR)
(72) Inventor: ICLI, Siddik, 35100 Izmir (TR); ZAFER, Ceylan, 35100 Izmir (TR); OCAKOGLU, Kasim, 35100 Izmir (TR); KARAPIRE, Canan, 35100 Izmir (TR); YOLDAS, Bulent, 35100 Izmir (TR); TEOMAN, Yildirim, 34130 Istanbul (TR); KUBAN, Baha, 34130 Istanbul (TR)
(74) Representative: Yavuzcan, Alev
(86) International application number: PCT/IB2005/002501
(87) International publication number: WO 2007/020485

(56) References cited:
- EP-A- 1 213 775
- EP-A- 1 363 348
- EP-A- 1 471 585
- DONGSHE ZHANG, TSUKASA YOSHIDA, KEN FURUTA, HIDEKI MINOURA: "Hydrothermal preparation of porous nano-crystalline TiO2 electrodes for flexible solar cells" JOURNAL OF PHOTOCHEMISTRY AND PHOTOBIOLOGY A:CHEMISTRY, vol. 164, 2004, pages 159-166, XP002375748

## Description

### BACKGROUND OF THE INVENTION

In recent years, new generation of solar cells called "dye sensitized solar cells (DSSC)" were developed by Graetzel et al. in 1991 at EPFL, Switzerland. This new technology consists of constructing cell from nanocrystalline TiO₂ film coated as photoanode and Pt coated counter electrode, placed in sandwich geometry and the spacer between the two electrodes is liquid electrolyte containing iodide/triiodide redox couple. Stability problems caused by liquid leakage and solvent evaporation and low I-V yields, had prevented the commercialization of this technology. Long-term stability and low production costs are necessary in this field. The stability of these devices are affected by the parameters such as electrolyte, dye stability and sealing. Another important issue is to lower the high production costs and to enable the production in low temperatures. The production of nanocrystalline TiO₂ layer requires high temperatures such as 450-500°C and this range creates difficulties in the production of large scale modules.

Nanostructured titanium oxide films can be produced either by; i) dip coating, ii) spin coating, iii) spay coating of the transparent conductive oxide coated electrode with organic titanate containing sol-gel solution, iv) spraying the titanium (IV) acetyl acetone on the substrate heated to 450°C (spray pyrolysis), v) coating the commercial TiO₂ particles with ∼ 15 nm particle sizes on the substrate or vi) coating the TiO₂ particles prepared previously by hydrothermal growth at 150-250°C in autoclave. The common issue with these methods is the high temperature process.

Some research groups have studied the possibility of coating anatase nano-crystalline TiO₂ layer at room temperature by using different techniques; such as mechanical pressing and electrochemical deposition, etc. Due to poor contact with the electrode and with the particles themselves, the efficiencies were found lower than expected.

In prior art EP 1 213 775 (Seiko Epson Corporation) a titanium oxide film comprising anatase TiO2 crystals, the surfaces of which are modified with dye and its use for dye sensitized solar cell was disclosed.

In an article in Journal of Photochemistry and Photobiology A: Chemistry, vol. 164 titled "Hydrothermal preparation of porous nano-crystalline TiO2 electrodes for flexible solar cells" by Dongshe Zhang, Tsuka Yoshida, Ken Furuta, Hideki Minoura, , a titanium oxide film comprising anatase TiO2 crystals, the surfaces of which are modified with dye was disclosed. The titanium oxide films are produced by coating a substrate via a low temperature process of a sol liquid containing titanium oxide precursor and titanium oxide powder which coated substrate is hydrothermally treated and used for dye sensitized solar cells.

Although in this article a low temperature process for the production of titanium films were disclosed, the process which is disclosed in this present specification was not foreseen as far as the specific processing steps of modifying the titanium precursor with dye before the hydrolysation and hydrothermal growth, concentration of the sol and solvent exchange prior to the coating of the substrate.

To overcome these problems, the present invention provides a new method to produce mesoporous TiO₂ layer at low temperatures so that production of large scale modules is facilitated.

### SUMMARY OF THE INVENTION

The object of the present invention is to provide a process according to claim 1 or 7 for producing a titanium oxide film at low temperature, on the surface which is modified with dye.

Also disclosed herein is:
1) a titanium oxide film at low temperature, on the surface which is modified with dye.
2) a photo electrochemical cell using a titanium oxide film having a surface which is modified with dye produced at low temperature.
3) a titanium oxide film at low temperature sensitized with dye by adsorbing on the surface and using the same film for photo-catalytic and photovoltaic applications.

### DETAILED EXPLANATION OF THE INVENTION

After long term studies on titanium oxide coating techniques, it has been realized that it is possible to produce titanium oxide particles on the surfaces which are modified with dye at the precursor state. The organic titanate precursor e.g., titanium iso-propoxide or titanium chloride, is modified with a dye comprising of an anchoring group e.g., carboxylate or hydroxyl. The modification is made directly with titanium precursor or in diluted solution of alcohol: preferably in isopropyl alcohol.

The dye including carboxylate makes an esterification reaction with titanium alcoxide e.g. titanium propoxide. The resulting products are titanium-dye ester and alcohol. After modification of precursor, hydrolysis was made with the acid and water mixture. Colored titanium oxide precipitates immediately.

The above explanation can be represented via following formulae: 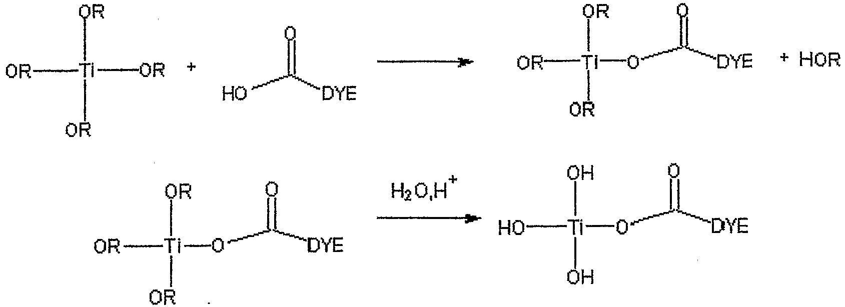 or

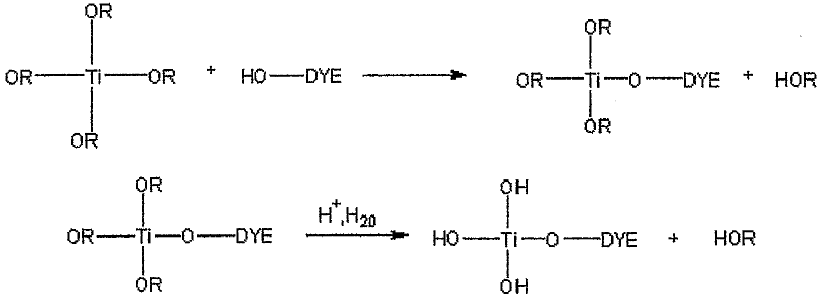

The steps following the precipitation as a result of the above mentioned chemical reactions are :
(1) peptizing the sol (braking the aglomerates) at temperature in the range of 50-100 °C for 1 to 12 hours, (2) hydrothermal growth of titanium oxide particle surfaces which are modified with dye in autoclave in the temperature range of 100-200°C from 1 to 48 hours, (3) concentration of the water-acid based modified titanium oxide-dye paste to desired percentage in the range of 5-50% (w/w).

Coating the prepared paste onto the substrate e.g. transparent conductive oxide coated glass, transparent conductive oxide coated polymer, glass, ceramic or the like, were made by the doctor blade technique or the screen printing. After the preparation of the film, the sample was dried first at room temperature and later in the oven at 50 to 200°C from 3-50 hours to remove the water and acid. The films were strongly colored.

At the end of this process, the thickness of modified titanium oxide-dye film should preferably be in the range of 0.5 to 50 micrometers. AFM images show that the particle size of TiO₂ crystals is around 25 nm. XRD patterns show that the crystal structure is completely anatase.

Also disclosed herein is the obtention of a photo electrochemical cell using a titanium oxide film having a surface which is modified with dye and produced at low temperature The photo electrochemical cell is comprised of a working electrode which is sensitized titanium oxide coated electrode, catalyst coated counter electrode, and redox couple including electrolyte. The term "electrochemical cell" refers to a device capable of converting the light to an electrical energy via electrochemical reactions. Irradiation of cell with light activates the electrons at the dye sensitizer on the surface of titanium oxide and later the electrons are transferred to titanium oxide's conduction band and afterwards to a counter electrode through an external circuit. From the counter electrode surface via the catalyst e.g. platinum, the electron is transferred to ions in electrolyte which is comprised of redox couple. Finally, the electron is transferred to the oxidized dye and the dye regeneration occurs. This cycle forms a circuit and by this way light is converted to electrical energy.

Yet, another object of the present invention is to provide a titanium oxide film which is prepared at low temperature without any modification with dye at the precursor state and afterwards sensitizing with dye and using the same film for photo-catalytic degradation and photovoltaic (i.e. photo electrochemical cell or photo electric conversion device) applications.

The preparation of titanium oxide particles and film is similar to the procedure described above except that the modification of titanium alcoxide precursor with dye. The precursor is hydrolyzed directly or modified with some chelating agents such as acetyl acetone or acetic acid with (1:1) molar ratio. Hydrolysis is conducted with acid and water mixture. Titanium oxide particles precipitated immediately.

The steps following the precipitation as a result of the above mentioned chemical reactions are:
(1) peptizing the sol at temperature in the range of 50 to 100°C from 1 to 12 hours, (2) hydrothermal growth of the surfaces of titanium oxide particles which are modified with dye in autoclave in the temperature range of 100-200°C from 1 to 48 hours, (3) concentration of the water-acid based modified titanium oxide-dye paste to desired percentage in the range of 5 to 50% (w/w).

Coating the prepared titanium oxide paste onto the substrate e.g. transparent conductive oxide coated glass, transparent conductive oxide coated polymer, glass, ceramic or the like, are made by the doctor blade technique or the screen printing. After the application of the film, the sample is first dried at room temperature and then in the oven at 50 to 200°C from 3 to 50 hours to remove water and acid. The thickness of modified titanium oxide-dye film should preferably be in the range of 0.5 to 50 micrometers. AFM images show that the particle size of TiO₂ crystals is around 25 nm. XRD patterns show that the crystal structure is completely anatase.

Obtained TiO₂ films are immersed into the previously prepared dye solutions containing photosensitizing dye with anchoring groups for sensitization for 1 to 24 hours. The term "photosensitizing dye" as used herein refers to a dye which can exhibit absorption in the visible light region or infrared region. The photosensitizing dyes useful in this process include metal complexes and organic dyes. Photosensitizing dyes having anchoring groups, such as carboxyl, hydroxyl, sulfonate etc., are especially preferred as they are strongly adsorbed onto the titanium oxide surface. In the present invention, one or more of the photosensitizing dyes may be used.

Obtained sensitized titanium oxide films produced at low temperature is used to produced Photo electrochemical cell, as described previously.

For photo catalytic activity of titanium oxide films prepared at low temperatures, obtained titanium oxide films are immersed into various dye solutions to adsorb the dye onto the titanium oxide surface. The sensitized titanium oxide films are exposed to white light of direct sun light or a solar simulator. The UV-Vis absorption spectrum of sensitized titanium oxide film is measured for comparison with later irradiated samples. Periodically, the absorption spectra of samples are measured to determine the photo degradation of dye adsorbed on titanium oxide. The optical density (absorbance) of dye at maximum absorption wavelength is decreased systematically versus the time of exposure.

The present invention is further described with reference to examples and figures without being limited thereto.

In the drawings :

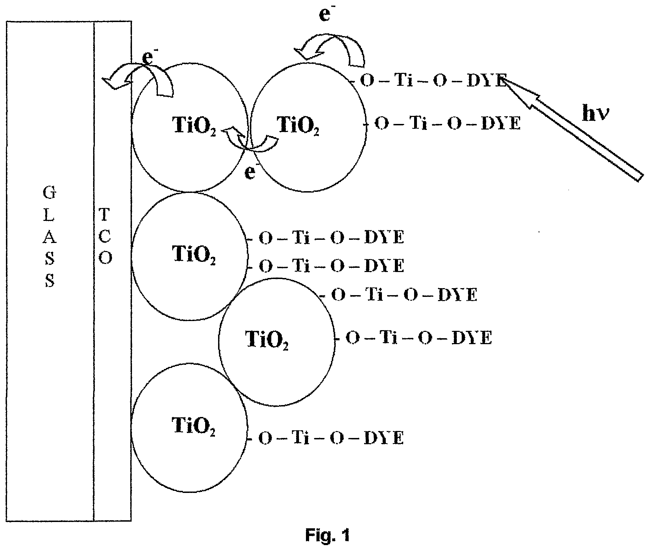

Figure 1 is the scheme of chemically bonded Dye-TiO₂ particle
Figure 2 is the AFM image of N719 attached - TiO₂ crystal particles. Here the average particle size is ca. 20 nm.
Figure-3 is the XRD pattern of HMPER attached TiO₂ particles (particle size is 20 nm) prepared by hydrothermal crystallization. The crystal form is anatase.
Figure 4 is the photo electrochemical cell structure in which the numbers used are explained here below:
   1 and 6 refer to glass or polymer substrates
   2 and 5 refer to transparent conductive oxide (TCO) layers (Florine dopped tin oxide, FTO; Tin dopped indium oxide, ITO; Aluminium dopped zinc oxide, AZO)
   3 refers to the chemically bonded mesoporous Dye - TiO₂ layer
   4 refers to the electrolyte including redox couple
   7 refers to the polymer sealant
   8 refers to the catalyst layer (Pt)

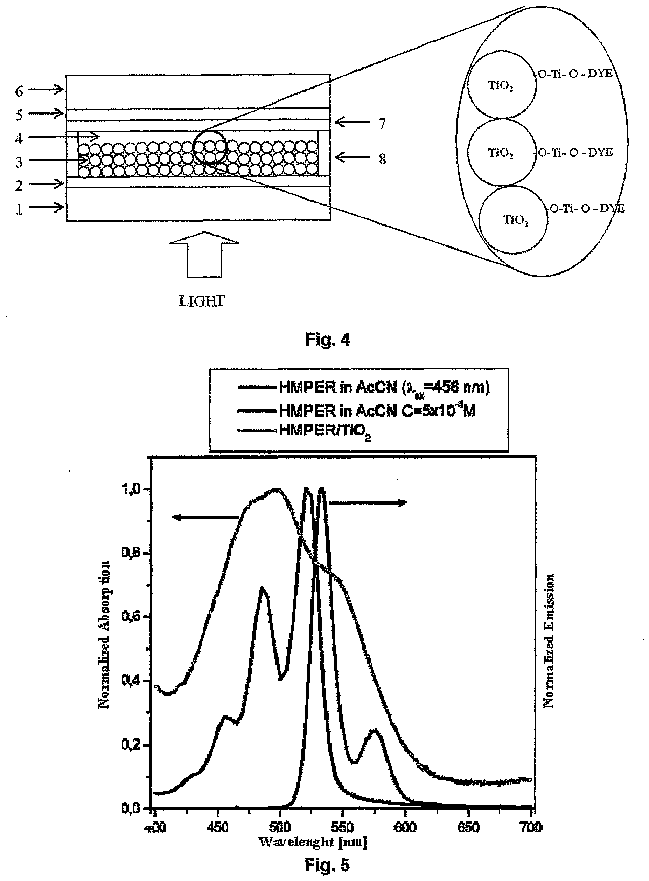

Figure 5 is the UV-Vis Absorption spectrum of HMPER in acetonitrile (AcCN)(black line), fluorescence emission spectrum of HMPER in AcCN (red line) and absorption spectrum of chemically bonded HMPER-TiO2 film. (green line)

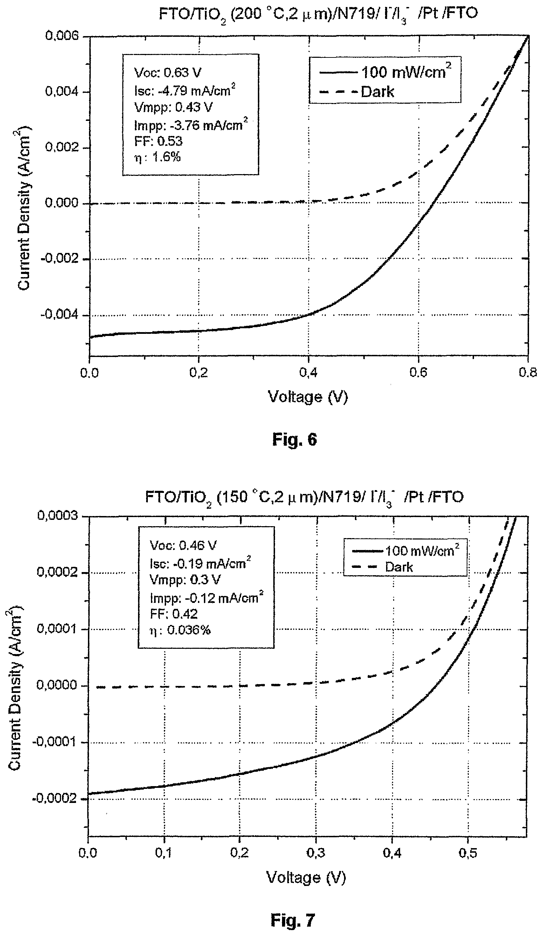

Figure 6 shows the first graph of DSSCs prepared with chemically bonded and physically adsorbed DYE-TiO₂ layer
Figure 7 shows the second graph of DSSCs prepared with chemically bonded and physically adsorbed DYE-TiO₂ layer

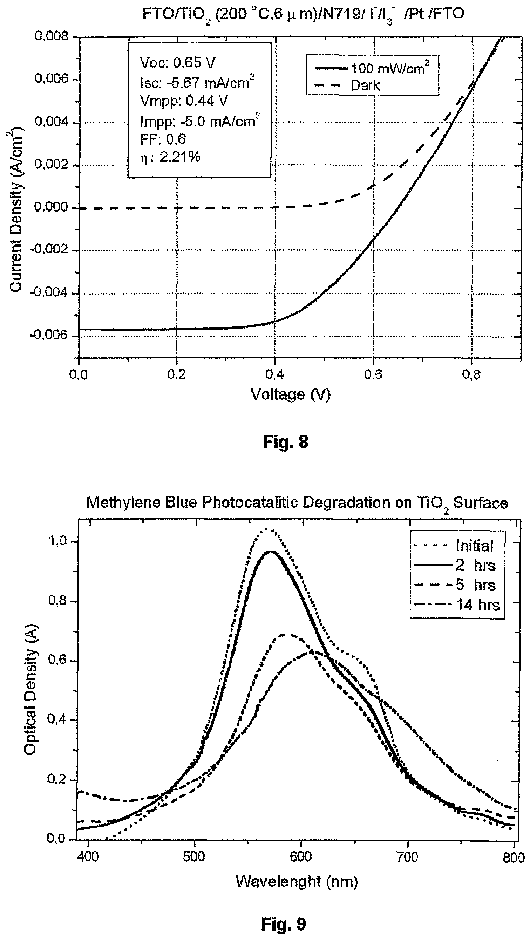

Figure 8 shows the third graph of DSSCs prepared with chemically bonded and physically adsorbed DYE-TiO₂ layer

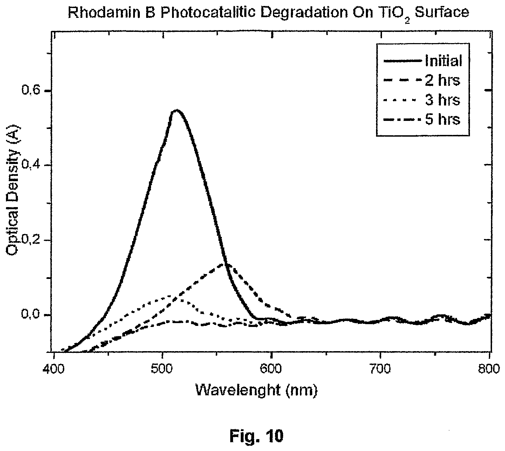

Figure 9 and 10 are the UV-Vis Absorption spectra showing photo catalytic degradation of Rhodamine B (a) and Methylene Blue (b) under 240 W/m² irradiance using Xe lamp.

### Example 1:

### Preparation of nanocrystalline anatse TiO₂-Organometalic Dye film at low temperature:

Tetraisopropylorthotititanate (TTIP, Acros) was used as the precursor of TiO₂ particles. Commercially available ruthenium complex N719 was used as a sensitizer dye. 5x10⁻³ M solution of N719 was prepared in 0.2 mol dry 2-PrOH (Merck) firstly under Argon (Ar) atmosphere. 0.1 mol TTIOP was added to the dye solution under vigorous stirring and inert Ar atmosphere. The precursor solution was stirred in closed flask for 30 min. to achieve an ester link between TTIOP and N719. Precursor solution was added drop wise to 10 mol H₂O and 1 mol Acetic acid mixture in ice bath under vigorous stirring. Strong red-purple colored precipitates were formed immediately. The suspension was stirred for an additional 30 minutes in order to achieve complete hydrolysis. The sol was refluxed at 80°C for 4 hours for peptization. After peptization, completely clear Dye-TiO₂ sol was obtained. The peptized sol was placed in Teflon® baker equipped autoclave for hydrothermal crystallization and crystal growth. The sample was heated at different temperatures between 100-200°C for 12 hours.

The sol was concentrated to 20% TiO₂-Dye (w/w). Obtained final paste centrifuged for solvent exchange, water and acetic acid mixture was separated and the precipitate was washed with ethanol three times. And final Dye-TiO₂ concentration was adjusted to 15 % (w/w). Obtained paste was coated onto the transparent conducting oxide (TCO) coated glass substrates by doctor blading or screen printing. The films were dried first at room temperature and later in the oven at 150°C for 3hours (Sample 1).

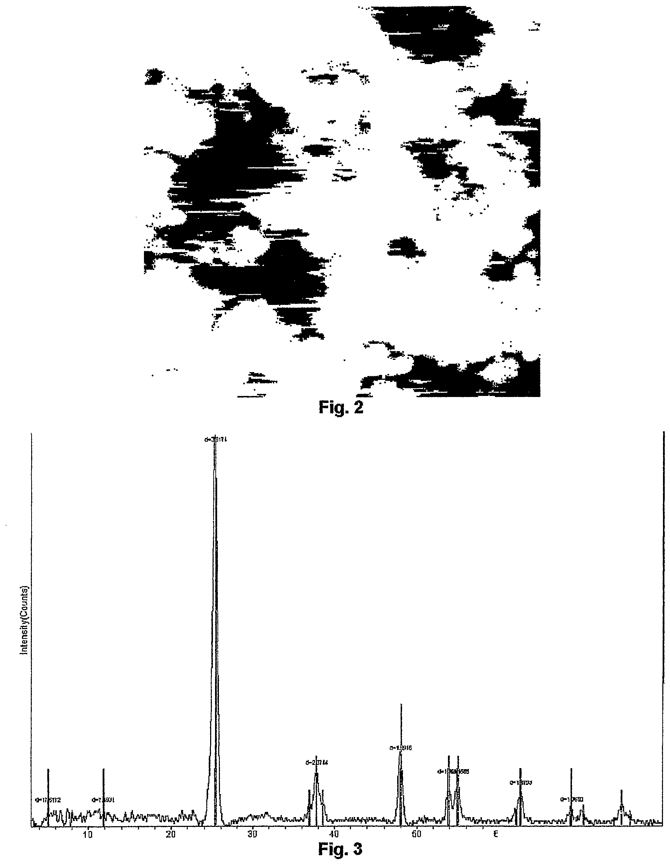

According to AFM images, the average particle size of dye attached TiO₂ crystals obtained from the sample heated at 200°C for 12h is ca. 20 nm (Figure 2). And XRD analysis of this particles show that the sample is in anatase form TiO₂ (Figure 3).

### Example 2:

### Preparation of nanocrystalline anatase TiO₂-Organic Dye Film at low temperature:

Tetraisopropylorthotititanate (TTIP, Acros) was used as the precursor of TiO₂ particles. Hydroxy derivative of Perylenediimide (HMPER) was used as a sensitizer dye. 5x10⁻³ M solution was prepared in 0.2 mol dry 2-PrOH (Merck Co.) firstly under Ar atmosphere. 0.1 mol TTIOP was added to the dye solution under vigorous stirring and inert Ar atmosphere. The precursor solution was stirred in closed flask for 30 minutes to achieve an ether link between TTIP and HO- derivative of Perylene dye (HMPER). Precursor solution was added dropwise to 10 mol H₂O and 1 mol Acetic acid mixture in ice bath under vigorous stirring. Strong red color red colored precipitates were formed immediately. The suspension was stirred for an additional 30 minutes in order to achieve complete hydrolysis. The sol was refluxed at 80 °C for 4h hours for peptization. After peptization, completely clear Dye-TiO₂ sol was obtained. The peptized sol was placed in a Teflon® baker equipped autoclave for hydrothermal crystallization and crystal growth. The sample was heated to different temperatures between 100-200°C for 12 hours.

The sol was concentrated to 20% TiO₂-Dye (w/w). Obtained final paste was centrifuged for solvent exchange, water and acetic acid mixture was separated and the precipitate was washed with ethanol for three times. And final Dye-TiO₂ concentration was adjusted to 15 % (w/w). Obtained paste was coated onto the transparent conducting oxide (TCO) coated glass substrates by doctor blading or screen printing. The films were dried first at room temperature and later in the oven at 150°C for 3h (Sample 2).

The average particle size of dye attached TiO₂ crystals obtained from the sample heated at 200 °C for 12h is ca. 20 nm (Figure 2). XRD analysis of these particles shows that the sample is in anatase TiO₂ form (Figure 3).

### Example 3:

### Preparation of nano crystalline anatase TiO₂ Film at Low Temperature

Tetraisopropylorthotititanate (TTIP, Acros) was used as a precursor for TiO₂ particles. 0.1 mol TTIP is mixed with 0.1 mol acetic acid to achieve a single side modification of TTIP. Precursor solution was added drop wise to 10 mol H₂O and 1 mol acetic acid mixture in ice bath under vigorous stirring. White precipitates were formed immediately. In order to complete hydrolysis, the suspension was stirred for an additional 30 minutes. The sol was refluxed at 80°C for 4h hours for peptization. After peptization, completely clear TiO₂ sol was obtained. The peptized sol was placed in Teflon® baker equipped autoclave for hydrothermal crystallization and crystal growth. The sample was heated at different temperatures between 100-200°C for 12 hours. The sol was concentrated to 20% TiO₂ (w/w). Obtained final paste was centrifuged for solvent exchange, water and acetic acid mixture was separated and the precipitate was washed for three times with ethanol. The final TiO₂ concentration was adjusted to 15 % (w/w). Obtained paste was coated onto the transparent conducting oxide (TCO) coated glass substrates by doctor blading or screen printing. The films were dried first at room temperature and later in the oven at

200°C for 12 hours. Two films with two different thicknesses, 2 µm (Sample 3a) and 6 µm(Sample 3b) were prepared. When the films were still at 100°C, they were immersed in N719 dye solution in ethanol at room temperature from 1 to 12 hours. The colored titanium oxide film was washed with pure ethanol.

### Example 4:

### Preparation photo electrochemical cell and characterization:

Photo electrochemical cells were prepared in sandwich geometry (Figure 4) by using the TiO₂ film coated TCO glasses (Sample 1, Sample 2, Sample 3) as a photo anode and thermally coated platinum TCO glass as a counter electrode. The space between the electrodes filled with electrolyte containing 0.5M Lil + 0.05M I₂ + 0.5M TBP in 3-Methoxypropionitrile. The cells were sealed by hot melting polymer Surlyn- 1702 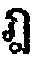 (DuPont Co.). Current-Voltage (I-V) measurements were done under illumination of 100 mW/cm², AM 1.5 radiation using KHS solar simulator and Keithley-2400® Source-Measure Unit. The data were collected with data acquisition software.

When sample 1 of Example 1 was used, a short circuit current was 0.56 mA/cm², open circuit voltage was 0.49 V, fill factor was 0.42 and conversion efficiency was 0.12 %. When the sample 2 was used, a short circuit current was 0.19 mA/cm², open circuit voltage was 0.46 V, fill factor was 0.42 and conversion efficiency was 0.036 %. When sample 3a was used, a short circuit current was 4.79 mA/cm², open circuit voltage was 0.63 V, fill factor was 0.53 and conversion efficiency was 1.6% and when the sample 3b was used, a short circuit current was 5.67 mA/cm², open circuit voltage was 0.65 V, fill factor was 0.6 and conversion efficiency was 2.2%.

### Example 5:

### Photo catalytic activity of titanium oxide films prepared at low temperatures:

The titanium oxide films were prepared according to the procedure given in Example 3. Rhodamine B (Sample 4a) and Methylene Blue (Sample 4b) were adsorbed onto titanium oxide films instead of N719 to investigate photo catalytic activity of titanium oxide films prepared at low temperatures. The acetonitrile solutions of each dye with 1 mM concentration were used. Sensitized titanium oxide films were exposed with 240 W/m² irradiance in the solar simulator equipped with 1100 W Xe lamp. The initial absorbance of both sensitized titanium oxide films were measured before starting the irradiation. Periodically, absorbance measurements were made to determine the degradation of dyes versus irradiation time. After 5 hours of irradiation, the Rhodamine B, adsorbed on titanium oxide film prepared at low temperature was completely degraded and the optical density was zero. Methylene Blue was more stable and after 14 hours of irradiation, still 50% of initial amount was remained. These data showed that the titanium oxide film produced at low temperature, exhibits very high photo catalytic activity.

## Claims

1. A process for producing titanium oxide film comprising the steps of
a) modifying a precursor which is a titanium precursor with a dye
b) hydrolyzing the modified precursor,
c) increasing the particle size of dye modified TiO₂ crystals by hydrothermal growth in an autoclave at a temperature in the range of 50 to 200°C,
d) concentrating dye modified titanium oxide paste to a desired ratio,
e) exchanging the solvent by exchanging water-acid mixture with ethanol
f) coating the paste obtained in step (e) onto a substrate
g) drying the samples at a temperature in the range of 50 to 200°C,
h) repeating step (g) for a period of 48 hours.

2. The process as claimed in claim 1 to produce titanium oxide particles onto the surfaces modified with a dye at precursor state wherein the dye comprises an anchoring group including carboxylate or hydroxyl.

3. The process as claimed in claim 1 wherein the precursor is modified with dye comprising an anchoring group namely carboxylate or hydroxyl.

4. The process as claimed in claim 1 wherein the modification is made directly with titanium precursor

5. The process as claimed in claim 1 wherein the modification is made in diluted alcohol solution.

6. The process as claimed in claim 1 wherein the modification is made in isopropyl alcohol

7. A process for producing titanium oxide film comprising the steps of
a) hydrolyzing the titanate precursor,
b) increasing the particle size of TiO₂ crystals by hydrothermal growth in an autoclave at a temperature in the range of 50 to 200°C,
c) concentrating titanium oxide paste to a desired ratio
d) exchanging the solvent by exchanging water-acid mixture with ethanol
e) coating the paste onto a substrate,
f) drying the samples at a temperature in the range of 50 to 200°C,
g) Sensitizing the TiO₂ films by immersing into the organic or organometallic dye solution.

8. The process as claimed in claim 1 or 7 wherein the whole process is realized at a temperature below 200 °C.

9. The process as claimed in claim 1 or 7 wherein the organic titanate precursor is a titanium alcoxide (e.g. titanium isopropoxide) or titanium chloride.

## Patentansprüche

1. Verfahren zum Herstellen einer Titanoxidschicht, folgende Schritte umfassend
a) Modifizieren eines Präkursors, der ein Titanpräkursor ist, mit einem Farbstoff,
b) Hydrieren des modifizierten Präkursors,
c) Erhöhen der Teilchengröße von mit Farbstoff modifizierten TiO₂-Kristallen durch hydrothermales Wachstum in einem Autoklav bei einer Temperatur im Bereich von 50 bis 200 °C,
d) Konzentrieren von mit Farbstoff konzentrierter Titanoxidpaste auf ein gewünschtes Verhältnis,
e) Austauschen des Lösungsmittels durch Austauschen von Wasser-Säure-Gemisch mit Ethanol,
f) Aufbringen der in Schritt (e) erlangten Paste auf einen Träger,
g) Trocknen der Proben bei einer Temperatur im Bereich von 50 bis 200 °C,
h) Wiederholen von Schritt (g) für einen Zeitraum von 48 Stunden.

2. Verfahren nach Anspruch 1 zum Herstellen von Titanoxidteilchen auf den mit einem Farbstoff modifizierten Oberflächen im Präkursorzustand, wobei der Farbstoff eine Verankerungsgruppe enthält, die Carboxylat oder Hydroxyl beinhaltet.

3. Verfahren nach Anspruch 1, wobei der Präkursor mit Farbstoff modifiziert wird, der eine Verankerungsgruppe enthält, und zwar Carboxylat oder Hydroxyl.

4. Verfahren nach Anspruch 1, wobei die Modifikation unmittelbar mit Titanpräkursor erfolgt.

5. Verfahren nach Anspruch 1, wobei die Modifikation in verdünnter Alkohollösung erfolgt.

6. Verfahren nach Anspruch 1, wobei die Modifikation in Isopropylalkohol erfolgt.

7. Verfahren zum Herstellen einer Titanoxidschicht, folgende Schritte umfassend
a) Hydrieren des Titanatpräkursors,
b) Erhöhen der Teilchengröße von TiO₂-Kristallen durch hydrothermales Wachstum in einem Autoklav bei einer Temperatur im Bereich von 50 bis 200 °C,
c) Konzentrieren von Titanoxidpaste auf ein gewünschtes Verhältnis,
d) Austauschen des Lösungsmittels durch Austauschen von Wasser-Säure-Gemisch mit Ethanol,
e) Aufbringen der Paste auf einen Träger,
f) Trocknen der Proben bei einer Temperatur im Bereich von 50 bis 200 °C,
g) Sensibilisieren der TiO₂ -Schichten durch Eintauchen in die organische oder organometallische Farbstofflösung.

8. Verfahren nach Anspruch 1 oder 7, wobei das gesamte Verfahren bei einer Temperatur unter 200°C durchgeführt wird.

9. Verfahren nach Anspruch 1 oder 7, wobei der organische Titanatpräkursor Titanalcoxid (z. B. Titanisopropoxid) oder Titanchlorid ist.

## Revendications

1. Procédé de production d'un d'oxyde de titane comprenant les étapes de
a) modifier un précurseur qui est un précurseur de titane avec un colorant
b) hydrolyser le précurseur modifié,
c) augmenter la taille des particules de cristaux de TiO₂ modifiés par un colorant par croissance hydrothermale dans un autoclave à une température entre 50 et 200°C,
d) concentrer la pâte d'oxyde de titane modifiée par un colorant dans un rapport souhaité,
e) échanger le solvant en échangeant le mélange eau-acide avec de l'éthanol,
f) enduire la pâte obtenue à l'étape (e) sur un substrat
g) sécher les échantillons à une température entre 50 et 200°C,
h) répéter l'étape (g) pendant une période de 48 heures.

2. Procédé selon la Revendication 1 de production des particules d'oxyde de titane sur les surfaces modifiées par un colorant à l'état précurseur où le colorant comprend un groupe d'ancrage comprenant un carboxylate ou un hydroxyle.

3. Procédé selon la Revendication 1 où le précurseur est modifié par un colorant comprenant un groupe d'ancrage, à savoir un carboxylate ou un hydroxyle.

4. Procédé selon la Revendication 1 où la modification est effectuée directement avec un précurseur de titane.

5. Procédé selon la Revendication 1 où la modification est effectuée dans une solution d'alcool diluée.

6. Procédé selon la Revendication 1 où la modification est effectuée dans une solution d'alcool isopropylique.

7. Procédé de production d'un d'oxyde de titane comprenant les étapes de
a) hydrolyser le précurseur de titanate,
b) augmenter la taille des particules de cristaux de TiO₂ par croissance hydrothermale dans un autoclave à une température entre 50 et 200°C,
c) concentrer la pâte d'oxyde de titane dans un rapport souhaité,
d) échanger le solvant en échangeant le mélange eau-acide avec de l'éthanol,
e) enduire la pâte sur un substrat,
f) sécher les échantillons à une température entre 50 et 200°C,
g) Sensibiliser les films de TiO₂ en les immergeant dans la solution de colorant organique ou organométallique.

8. Procédé selon la Revendication 1 ou 7 où l'ensemble du processus est réalisé à une température inférieure à 200°C.

9. Procédé selon la Revendication 1 ou 7 où le précurseur de titanate organique est un alcoxyde de titane (par exemple l'isopropoxyde de titane) ou du chlorure de titane.
